# EUROPÄISCHE PATENTSCHRIFT

(11) **EP 1 925 530 B1**
(45) Veröffentlichungstag und Bekanntmachung des Hinweises auf die Patenterteilung: **29.07.2009**
(21) Anmeldenummer: 07021071.1
(22) Anmeldetag: 27.10.2007
(51) Int. Cl.: B62D 5/04, B62D 25/20

(54) **Kraftfahrzeug mit Stirnwandquerträger**
Motor vehicle with cowl cross-member
Véhicule automobile avec traverses frontales

(30) Priorität: 25.11.2006 DE 102006055721
(43) Veröffentlichungstag der Anmeldung: 28.05.2008
(73) Patentinhaber: Dr. Ing. h.c. F. Porsche Aktiengesellschaft, 70435 Stuttgart (DE)
(72) Erfinder: Wrobel, Leszek, 71277 Rutesheim (DE); Herntier, Matthias, 75449 Wurmberg (DE); Hogenmüller, Jan, 71229 Leonberg (DE); Dreses, Carsten, 71299 Wimsheim (DE)

(56) Entgegenhaltungen:
- EP-A- 1 228 948
- EP-A- 1 264 757
- DE-A1- 3 419 002
- JP-A- 2002 145 124
- JP-A- 2005 206 107

## Beschreibung

Die vorliegende Erfindung betrifft ein Kraftfahrzeug, insbesondere ein Personenkraftfahrzeug, mit einem Stirnwandquerträger nach dem Oberbegriff des Anspruchs 1.

Ein Kraftfahrzeug umfasst allgemein zwei seitlich angeordnete A-Säulen, eine Stirnwand, die einen Vorderwagen von einem Fahrgastraum trennt, sowie einen Mitteltunnel, der ein Bodenblech des Fahrzeugs versteifen und/oder einen Antriebsstrang, insbesondere eine Kardanwelle aufnehmen kann. Die A-Säulen, die Stirnwand, der Mitteltunnel und das Bodenblech des Kraftfahrzeugs können dabei voneinander getrennt ausgebildet sein. Zur Versteifung des Fahrzeugs sind sie jedoch bevorzugt miteinander verbunden.

Ein solches Kraftfahrzeug soll zur Verbesserung der Fahreigenschaften, aber auch für den Fall eines Seitenaufpralls in Fahrzeugquerrichtung ausreichend steif sein. Gleichzeitig soll bei einem Frontalaufprall der Vorderwagen möglichst wenig in den Fahrgastraum eindringen, um die Passagiere zu schützen.

Um die Steifigkeit des Kraftfahrzeugs in Fahrzeugquerrichtung zu erhöhen, ist es aus der DE 91 07 489 U1 bekannt, im vorderen Teil einer Fahrzeugkarosserie einen Querträger vorzusehen, der aus zwei rechteckförmigen Teilen und einer diese verbindenden und einen Kardantunnel übergreifenden Querstrebe besteht und mit Schwellerverstärkungen in Fahrzeuglängsrichtung zu einem Kastenrahmen verbunden ist. In der EP 1 382 514 A1 dient hierzu ein Bodenblech mit einem vorderen und einem hinteren Bodenquerträger sowie einem Sitzquerträger. Aus der EP 1 264 757 A2 ist ein Kraftfahrzeug mit zwei A-Säulen, einer Stirnwand, einem Mitteltunnel und einem Stirnwandquerträger bekannt, wobei dieser zwei Seitenteile umfasst, die an den A-Säulen des Kraftfahrzeugs angebunden sind und einen, diese beiden Seitenteile verbindenden Mittelteil besitzt, und die Seitenteile derart geformt sind, dass sie an der Stirnwand des Kraftfahrzeugs wenigstens teilweise anliegen und dort an die Stirnwand angebunden sind, wobei der Mittelteil an den Mitteltunnel des Kraftfahrzeugs wenigstens teilweise anliegt.

Um ein Eindringen des Vorderwagens in den Fahrgastraum zu vermeiden, ist es aus der DE 10 2004 060 190 A1 bekannt, einen Querträger an den A-Säulen anzuschweißen und zusätzlich an Flanschen abzustützen, die ihrerseits durch Bolzen an Längsträgern des Kraftfahrzeugs befestigt sind und dabei eine Stirnwand abstützen.

Nachteilig nutzt bei allen vorstehend erläuterten Ansätzen ein Seitenteil eines Querträgers jeweils nur einen Teil der zur Verfügung stehenden Abstützungsmöglichkeiten an A-Säule, Mitteltunnel, Stirnwand und dem gegenüberliegenden Seitenteil.

Daher schlägt die DE 103 38 389 A1 einen Querträger mit zwei Seitenteilen vor, von denen jeder an einer A-Säule des Kraftfahrzeugs und einem vertikalen Stirnwandträger angebunden ist. Die beiden vertikalen Stirnwandträger sind ihrerseits durch den Querträger miteinander verbunden, der wiederum über Streben mit dem Mitteltunnel verbunden sein kann. Jeder Seitenteil nutz damit direkt oder mittelbar alle zur Verfügung stehenden Abstützungen.

Damit werden Kräfte, die beispielsweise bei einem Frontalaufprall auf die Stirnwand einwirken, von den vertikalen Stirnwandträgern aufgenommen und von diesen einerseits direkt in damit verbundene bodenseitige Längsträger und andererseits mittelbar über den Querträger, der mit den vertikalen Stirnwandträgern verbundenen ist, in die A-Säulen und den Mitteltunnel übertragen, mit dem die Querverstrebung wiederum durch Streben verbunden ist.

Nachteilig umfassen die Kraftflüsse von der Stirnwand dabei mehrere Übergangsstellen, so beispielsweise von der Stirnwand zunächst in die vertikalen Stirnwandträger, von den vertikalen Stirnwandträgern in den Querträger, von dem Querträger in die diesen mit dem Mitteltunnel verbindenden Streben und schließlich von diesen in den Mitteltunnel..

Solche Übergangsstellen müssen einerseits jeweils die gesamten zu übertragenden Kräfte aufnehmen können und hierzu ausreichend fest dimensioniert sein, was den Fertigungsaufwand und das Fahrzeuggesamtgewicht nachteilig erhöht. Gleichzeitig stören solche Übergangsstellen die Kraftflüsse und bilden nachteilig Schachpunkte, die bei einem Unfall oder im Betrieb des Fahrzeugs, beispielsweise aufgrund von dabei auftretenden Verwindungen, versagen können.

Ausgehend von der DE 103 38 389 A1 ist es daher eine Aufgabe der vorliegenden Erfindung, ein Kraftfahrzeug zur Verfügung zu stellen, in dem Kräfte, insbesondere die im Betrieb oder bei einem Seitenaufprall auf eine A-Säule wirkende Querkräfte und/oder die bei einem Frontalaufprall auf die Stirnwand wirkenden Längskräfte, möglichst gut in die Fahrzeugkarosserie abgeleitet werden.

Zur Lösung dieser Aufgabe ist ein Kraftfahrzeug nach dem Oberbegriff des Anspruchs 1 durch dessen kennzeichnende Merkmale weitergebildet.

Ein erfindungsgemäßes Kraftfahrzeug umfasst in an sich bekannter Weise zwei A-Säulen, eine Stirnwand und einen Mitteltunnel. Bevorzugt ist dabei die Stirnwand mit den A-Säulen und dem Mitteltunnel, beispielsweise durch Schweißen und/oder Kleben, verbunden oder integral mit Teilen der A-Säulen und/oder des Mittelstunnels ausgebildet. Dabei bezeichnet der Begriff "A-Säule" die vordersten, sich im Wesentlichen vertikal erstreckenden Teile der einen Fahrgastraum definierenden Fahrzeugkarosserie und kann gleichermaßen die eigentlichen Karosserieelemente, Bleche, aus denen sich diese Karosserieelemente mehrteilig zusammensetzen können, und/oder diese Karosserieelemente wenigstens teilweise umgebende Bleche umfassen.

Ein erfindungsgemäßes Kraftfahrzeug umfasst weiter einen Stirnwandquerträger mit zwei Seitenteilen und einem diese verbindenden Mittelteil. Die Seitenteile sind mit ihrem von dem Mittelteil abgewandten Ende an je einer A-Säule des Kraftfahrzeugs angebunden. Hierdurch wird eine durchgängige Abstützung in Fahrzeugquerrichtung zwischen den beiden A-Säulen geschaffen.

Die Seitenteile sind erfindungsgemäß so geformt, dass sie an einer Stirnwand des Kraftfahrzeugs wenigstens teilweise anliegen und sind dort an die Stirnwand angebunden, wobei ein Mittelteil des Stirnwandquerträgers beabstandet zur Stirnwand verläuft. Durch diese direkte Anbindung der Seitenteile an die Stirnwand in Bereichen, in denen sie an der Stirnwand anliegen, entfällt vorteilhaft eine Umleitung des Kraftflusses zunächst auf vertikale Stirnwandträger und erst von diesen in den Stirnwandquerträger. Die Kräfte werden stattdessen direkt von der Stirnwand in den Stirnwandquerträger eingeleitet. Zudem stützen sich Stirnwand und Stirnwandquerträger durch das teilweise Anliegen gegenseitig formschlüssig aneinander ab, was die Krafteinleitung von dem einen in das andere Bauteil weiter verbessert. Weiterhin erleichtert das Anliegen des Stirnwandquerträgers an der Stirnwand deren direkte Anbindung aneinander.

Durch das erfindungsgemäße Heranführen des sich zwischen den A-Säulen erstreckenden Stirnwandquerträgers an die Stirnwand kann sich der Stirnwandträger somit an der Stirnwand abstützen und zusätzlich direkt an dieser angebunden werden. Damit können Kräfte, die auf die Stirnwand einwirken, direkt über den Stirnwandquerträger in die A-Säulen abgeleitet werden. Umgekehrt kann der Stirnwandquerträger an einer A-Säule angreifende Kräfte direkt sowohl an die gegenüberliegenden A-Säule wie auch die Stirnwand übertragen.

Der Mittelteil des erfindungsgemäßen Stirnwandquerträgers liegt an dem Mitteltunnel des Kraftfahrzeugs wenigstens teilweise an. Hierdurch stützt sich der Stirnwandquerträger zusätzlich formschlüssig direkt an dem Mitteltunnel ab. Von der Stirnwand oder einer A-Säule in den Stirnwandquerträger eingeleitete Kräfte können damit zusätzlich direkt in den Mitteltunnel übertragen werden. So können beispielsweise die bei einem Seitenaufprall von einer A-Säule aufgenommenen Kräfte über den Stirnwandquerträger an den Mitteltunnel, an dem dieser anliegt, an die Stirnwand, an die der Stirnwandquerträger direkt angebunden ist, und an die gegenüberliegenden A-Säule, an die er ebenfalls direkt angebunden ist, abgeleitet werden.

Durch diese mehrfache direkte Abstützung kann die Steifigkeit des Kraftfahrzeuges, insbesondere in Fahrzeugquerrichtung, vorteilhaft erhöht werden. Zusätzlich kann auch ein Endringen des Vorderwagens in den Fahrgastraum reduziert werden, so dass mit einem erfindungsgemäßen Stirnwandquerträger die Fahr- und Unfallsicherheit gleichermaßen erhöht werden kann.

Zusätzlich können durch die direkte Abstützung an Stirnwand und Mitteltunnel und die direkte Anbindung an die Stirnwand zusätzliche vertikale Stirnwandträger oder Streben und deren Verbindung mit dem Stirnwandquerträger entfallen, was das Gewicht und den Fertigungsaufwand vorteilhaft reduzieren kann.

Insgesamt ergibt sich in dem an dem Mitteltunnel und der Stirnwand anliegenden und dort direkt an die Stirnwand angebundenen Stirnwandquerträger ein direkter, ungestörter Kraftfluss, durch den auf die Stirnwand bzw. eine A-Säule einwirkende Kräfte harmonischer in die restliche Fahrzeugkarosserie abgeleitet werden können. Ein solcher harmonischerer Kraftfluss ermöglicht die Übertragung größerer Kräfte in kleineren Querschnitten, so dass der Stirnwandquerträger schwächer und damit leichter dimensioniert werden und/oder die Steifigkeit und Festigkeit erhöht werden kann.

Die Form des Mittelteils bzw. der Seitenteile des Stirnwandquerträgers bestimmt sich abschnittsweise durch die Kontur des Mitteltunnel- bzw. der Stirnwandbereichs, an dem der Stirnwandquerträger anliegt. Hierbei ist eine flächige, insbesondere eine großflächige Auflage des Stirnwandträgers an dem Mitteltunnel und/oder der Stirnwand zu bevorzugen, da sich hierdurch die übertragenen Druck- und Schubspannungen verringern.

Gleichwohl muss der Stirnwandträger nicht vollständig an dem Mitteltunnel bzw. der Stirnwand anliegen. Dies erhöht die Gestaltungsfreiheit und kann es insbesondere ermöglichen, die an der Stirnwand und dem Mitteltunnel anliegenden Bereich harmonisch, i.e. in einer zur Kraftübertragung günstigen Form, beispielsweise über Bögen, miteinander zu verbinden. Zusätzlich kann so zwischen dem Stirnwandquerträger und der Stirnwand bzw. dem Mitteltunnel Raum für weitere Bauteile, beispielsweise Teile einer Klimaanlage, einer Fahrzeugelektronik, einer Fahrzeuglenkung oder dergleichen geschaffen werden.

Insbesondere ist es möglich, mit einem erfindungsgemäßen Stirnwandquerträger auch in Fahrzeuglängsrichtung weiter nach hinten gezogene A-Säulen abzustützen, da der Stirnwandquerträger von diesen A-Säulen zur Stirnwand zurückgeführt ist und an dieser wenigstens teilweise anliegt, so dass er vorteilhaft nur wenig Raum im Fahrgastraum beansprucht. Von der Anbindung an die Stirnwand kann der Stirnwandträger dann zur Anlage an dem Mitteltunnel wieder in Fahrzeuglängsrichtung nach hinten gezogen sein, so dass die Abstützungen des Stirnwandquerträgers an den A-Säulen und dem Mitteltunnel in Fahrzeuglängsrichtung näher zusammen liegen. Hierdurch können vorteilhaft die wirksamen Hebelarme und damit die im Stirnwandquerträger auftretende Biegemomente verringert werden.

Bevorzugt sind die Seitenteile an der Stirnwand durch Verschrauben, Nieten, Kleben und/oder Schweißen, insbesondere Punktschweißen angebunden. Insbesondere die Punktschweißung an einem oder mehreren Schweißpunkten ermöglicht eine leichte, dauerhafte, zuverlässige und rasch herzustellenden Anbindung.

In einer bevorzugten Ausführung ist auch der Mittelteil an dem Mitteltunnel angebunden. Hierdurch wird die Abstützung noch verstärkt und es können auch Zug- und Schubkräfte von dem Stirnwandquerträger in den Mitteltunnel abgeleitet werden. Dies verbessert die Abstützung der A-Säulen und der Stirnwand an dem Mitteltunnel und erhöht so weiter die Steifigkeit und Stabilität der gesamten Anordnung. Somit wird insgesamt eine in sich versteifte Einheit aus Stirnwand, Stirnwandquerträger, A-Säulen und Mitteltunnel geschaffen. Die Anbindung erfolgt bevorzugt durch Verschrauben, Nieten, Kleben und/oder Schweißen, insbesondere Punktschweißen.

Die Kontaktflächen des Stirnwandquerträgers mit der Stirnwand und dem Mitteltunnel liegen bevorzugt in verschiedenen Ebenen bzw. Raumrichtungen. So kann der Stirnwandquerträger beispielsweise im wesentlichen in Fahrzeugquerrichtung von hinten an der Stirnwand anliegen und an dieser angebunden sein, während er im wesentlichen in Fahrzeughochrichtung von oben an dem Mitteltunnel anliegt und an diesem angebunden ist. Damit können gut zugängliche und montagefreundliche Anbindungspositionen dargestellt werden. Zudem können so große Flächen der Stirnwand bzw. des Mitteltunnels zur Anbindung genutzt werden, ohne den Fahrgastraum wesentlich zu reduzieren. Darüber hinaus stützt sich ein solcher Stirnwandquerträger vorteilhaft in allen drei Raumrichtungen jeweils formschlüssig ab: in Fahrzeuglängsrichtung gegen die Stirnwand, in Fahrzeugquerrichtung gegen die A-Säulen und in Fahrzeughochrichtung gegen den Mitteltunnel.

Die Seitenteile können an den A-Säulen des Kraftfahrzeugs ebenfalls durch Verschrauben, Nieten, Kleben und/oder Schweißen, insbesondere Punktschweißen angebunden sein. Hierbei ist es nicht erforderlich, jede Anbindung mit derselben Technik auszubilden. So kann beispielsweise der Stirnwandquerträger an der Stirnwand und dem Mitteltunnel durch Punktschweißen und an den A-Säulen durch Kleben angebunden sein. Dadurch kann einerseits, wie vorstehend beschrieben, eine dauerhafte, zuverlässige und leichte , Anbindung des Stirnwandträgers an Stirnwand und Mitteltunnel rasch hergestellt werden. Auf der anderen Seite kann die Klebeverbindung zwischen Stirnwandträger und A-Säulen Schwingungen in der Fahrzeugkarosserie dämpfen sowie Mikrobewegungen der Bauteile untereinander sowie Fertigungstoleranzen oder die, beispielsweise in Folge des Punktschweißens, auftretenden Wärmedehnungen und Schweißverzüge wenigstens teilweise ausgleichen.

Die Seitenteile können an ihrem mit der A-Säule verbundenen Ende eine Flanschanordnung zur Anbindung an die A-Säule aufweisen. Dies kann vorteilhaft die Anbindungsfläche vergrößern, was die zu übertragenden Spannungen verringert und so die Festigkeit der Anbindung und die Steifigkeit der gesamten Anordnung erhöht.

Die Anbindung an die A-Säule kann direkt oder über ein Blech erfolgen,'welches seinerseits die A-Säule wenigstens teilweise umgibt und an dieser abgebunden ist.

In einer bevorzugten Ausführung sind die Seitenteile und/oder der Mittelteil als Hohlprofil ausgebildet. Ein Hohlprofil weist vorteilhaft eine hohe Torsionssteifigkeit auf und kann so bei einem in Fahrzeugquer- und/oder -hochrichtung geschwungenen Stirnwandquerträger die Verwindungssteifigkeit der gesamten Anordnung erhöhen. Zudem weist es bei relativ geringem Gewicht eine hohe Biegesteifigkeit auf und kann so die Steifigkeit in Fahrzeuglängs-, -quer- und/oder -hochrichtung erhöhen.

Das Hohlprofil kann bevorzugt Bereiche mit einer zur Kontur der Stirnwand bzw. des Mittelstunnels komplementären Außenkontur aufweisen, um so einen möglichst optimalen formschlüssigen Kontakt zu gewährleisten. Insbesondere kann das Hohlprofil Bereiche mit einer flachen Seite zur Anlage an der Stirnwand bzw. dem Mitteltunnel aufweisen. So kann der Stirnwandquerträger bereichsweise ein Kastenprofil aufweisen, wobei unterschiedliche Bereiche Kastenprofile unterschiedlicher Abmessungen aufweisen und so den Anbindungsrandbedingungen wie der Kontur der Stirnwand bzw. des Mitteltunnels, dem zur Verfügung stehenden Raum und/oder den zu übertragenden Kräften angepasst werden können.

Dabei kann eine erste Wand des Hohlprofils eine oder mehrere Öffnungen aufweisen, durch welche eine oder mehrere Punktschweißstellen auf einer zweiten Wand des Hohlprofils zugänglich sind. Hierdurch können die vorstehend beschriebenen Vorteil des Kastenprofils und der Punktschweißung miteinander kombiniert werden, wobei die Punktsschweißung leicht ausgeführt werden kann und insbesondere keine Spezialwerkzeuge erfordert, die von der Stirnseite her in das Kastenprofil eingeführt werden können.

In einer bevorzugten Ausführung ist im Hohlprofil gegenüber jedem Schweißpunkt eine Öffnung vorgesehen, durch die ein Arm einer Schweißzange eingeführt und zu dem Schweißpunkt geführt werden kann. Der durch die Schweißzange hergestellte Schweißpunkt verbindet dann die zweite Wand des Hohlprofils mit der Stirnwand bzw. dem Mitteltunnel. Gleichzeitig schwächt eine Mehrzahl von kleineren, lediglich den Zugang des Schweißzangenarmes zum Schweißpunkt ermöglichenden Öffnungen die Festigkeit des Hohlprofils nur geringfügig. Gleichermaßen ist es auch möglich, weniger Öffnungen als Schweißpunkte vorzusehen und diese so anzuordnen und zu dimensionieren, dass durch eine Öffnung mehrere Schweißpunkte zugänglich sind. Die zweite Wand muss nicht der ersten Wand gegenüberliegen, sondern kann sich beispielsweise auch unter einem Winkel an diese anschließen.

In einer besonders bevorzugten Ausführung sind das Mittelteil und die Seitenteile einteilig miteinander ausgebildet. Hierdurch werden Verbindungsstellen zwischen den einzelnen Teilen des Stirnwandquerträgers, die den Kraftfluss stören würden, vermieden und so die Festigkeit und Steifigkeit der gesamten Anordnung erhöht, während gleichzeitig das Gewicht des Stirnwandquerträgers aufgrund der fehlenden Verbindungsstellen gesenkt werden kann.

Vorteilhafterweise wird der Stirnwandquerträger mittels eines Innenhochdruckverfahrens hergestellt. Dieses Verfahren, bei dem ein hohlprofilformiges Halbzeug, insbesondere aus Stahl, durch hohen Druck im Inneren des Hohlprofils in die gewünschte Form gebracht wird, ist zur Herstellung eines hohlprofilförmigen Stirnwandträgers mit an die Kontur der Stirnwand und des Mitteltunnels angepasster Form besonders geeignet. Gleichermaßen sind natürlich auch andere Herstellungsverfahren, insbesondere Stahl(druck)guss, Tiefziehen, Kalt- oder Warmverformen oder ein Verschweißen mehrerer Einzelteile möglich.

Bevorzugt stehen die Seitenteile gegenüber dem Mittelteil in Fahrzeuglängsrichtung konvex nach vorne vor. Dabei können die Seitenteile im Wesentlichen bogenförmig ausgebildet sein, so dass der gesamte Stirnwandquerträger etwa die Form eines sogenannten Recurve-Bogens aufweist. Hierdurch können einerseits in Fahrzeuglängsrichtung hinter der Stirnwand angeordnete A-Säulen an einem ebenfalls hinter der Stirnwand angeordneten Bereich des Mitteltunnels abgestützt werden, ohne dass hierbei große Biegemomente um die Fahrzeughochachse auftreten. Gleichzeitig können die zwischen den A-Säulen und dem Mitteltunnel liegenden Bereiche des Stirnwandquerträgers an die Stirnwand herangeführt und dort an diese angebunden werden, was nicht nur die Steifigkeit des Fahrzeugs erhöht, sondern auch den im Fahrgastraum zur Verfügung stehenden Raum vorteilhaft nur wenig reduziert.

Zudem wirken die konvex nach vorne vorstehenden Seitenteile einem Eindringen des Vorderwagens in den Fahrgastraum entgegen, da hierbei zunächst der Bogen der Seitenteile eingedrückt werden muss, der sich beidseitig an A-Säule bzw. Mitteltunnel abstützt. Die dabei auftretende plastische Verformung des Stirnwandquerträgers kann einen Teil der Aufprallenergie absorbieren. Weiterhin ist ein solcher Stirnwandquerträger in Fahrzeuglängsrichtung knickstabiler und vermindert so ebenfalls ein Eindringen des Vorderwagens in den Fahrgastraum. Zusätzlich verlängert sich ein solcher Stirnwandquerträger mit gegenüber den Seitenteilen zurückversetztem Mittelteil in der Fahrzeugquerrichtung, so dass der Vorderwagen bei einem Frontalaufprall mehr Material plastisch verformen muss, was ebenfalls ein Eindringen in den Fahrgastraum reduziert.

Durch die konvex nach vorne vorstehenden Seitenteile kann ein Stirnwandquerträger darüber hinaus besonders gut der Stirnwand folgen und an dieser in weiten Bereichen anliegen.

Ist der Mitteltunnel mit der Stirnwand verbunden, können die Übergangsbereiche zwischen Mitteltunnel und Stirnwand mit den dabei in der Regel auftretenden unterschiedlichen und kleinen Radien und Freiformflächen durch das nach hinten gezogene Mittelteil des Stirnwandquerträgers überbrückt werden, so dass der Stirnwandquerträger insgesamt eine relativ einfache Gesamtkontur aufweisen kann. In einer bevorzugten Ausführung liegen daher die Seitenteile des Stirnwandquerträgers lediglich an ihren vom Mittelteil abgewandten Endbereichen an der Stirnwand an, während sie in einem Übergangsbereich zum Mittelteil von der Stirnwand beabstandet sind.

Durch das von der Stirnwand beabstandete Mittelteil des Stirnwandquerträgers entgegen der Fahrtrichtung nach hinten - die Stirnwand läuft weiterhin gerade durch - kann ein sich zurückverlagerter Motor bei einem Crashfall den Stirnwandquerträger nicht beschädigen. Die Struktur und Funktion des Rohbaus bleibt weitestgehend erhalten. Dadurch verlängert sich die sogenannte Crashlänge bzw. der Crashweg und die Belastungen der Insassen werden verringert. Bei herkömmlichen Konstruktionen bildet der Querträger der Stirnwand ein sogenanntes Kastenprofil und der Stirnwandquerträger ist in Fahrtrichtung gesehen weit nach vorne hin verlagert, so dass sich bei einem Crash der Motor nach hinten entgegen der Fahrtrichtung verschiebt und somit den Stirnwandquerträger beschädigt. Dies wird durch den erfindungsgemäßen Stirnwandquerträger vermieden.

Weitere Aufgaben, Vorteile und Merkmale ergeben sich aus den Unteransprüchen und den nachfolgenden Ausführungsbeispielen. Hierzu zeigt, teilweise schematisiert:
- Fig. 1: ein Vorderteil eines Kraftfahrzeugs nach einer Ausführung der vorliegenden Erfindung mit einem Stirnwandquerträger in perspektivischer Ansicht;
- Fig. 2: den Stirnwandquerträger aus Fig. 1 in perspektivischer Ansicht;
- Fig. 3: den Stirnwandquerträger aus Fig. 2 in Fahrzeughochrichtung von oben;
- Fig. 4: den Stirnwandquerträger aus Fig. 2 in Fahrzeuglängsrichtung von hinten;
- Fig. 5: den Stirnwandquerträger aus Fig. 2 in Fahrzeugquerrichtung von links.

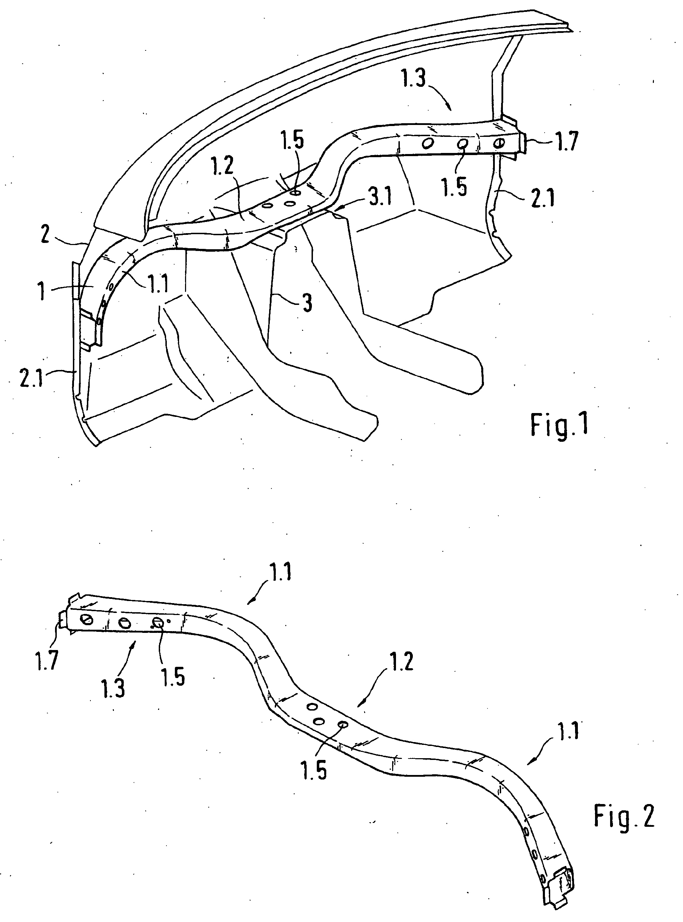

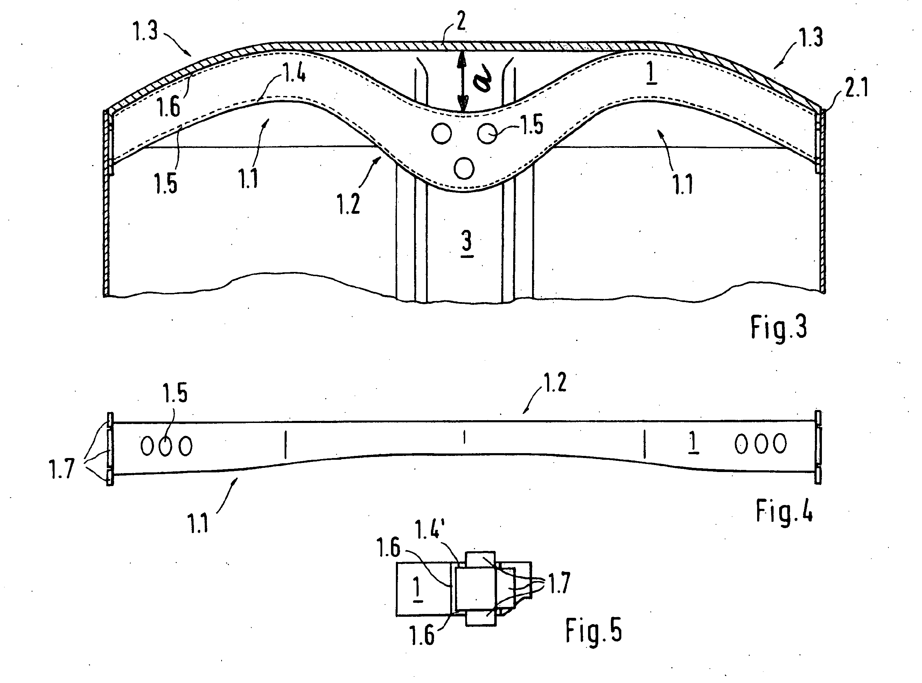

Fig. 1 zeigt den vorderen Teil der Karosserie eines Personenkraftwagens nach einer Ausführung der vorliegenden Erfindung in perspektivischer Ansicht mit einem Stirnwandquerträger 1, einer Stirnwand 2, einem damit, beispielsweise durch Schweißen oder Kleben, verbundenen Mitteltunnel 3 und zwei mit der Stirnwand 2 , beispielsweise ebenfalls durch Schweißen oder Kleben, verbundene A-Säulen (nicht dargestellt). Zur Anbindung der A-Säulen weist die Stirnwand 2 seitliche Flanschbereiche 2.1 auf. In Fig. 3, die den Stirnwandquerträger 1 in Fahrzeughochrichtung von oben zeigt, sind die Stirnwand 2, der Mitteltunnel 3 und die A-Säulen zur Verdeutlichung der Einbaulage mit angedeutet.

Der Stirnwandquerträger 1 kann mittels Innenhochdruck einteilig aus einem StahlHohlprofil geformt werden. Er umfasst einen im Wesentlichen kastenförmiges Mittelteil 1.2 und sich daran in Fahrzeugquerrichtung anschließenden Seitenteile 1.1, die einen im Wesentlichen ebenfalls kastenförmigen Querschnitt aufweisen. Die Seitenteile 1.1 sind, wie insbesondere in Fig. 3 und 4 zu erkennen, schmäler und höher als das Mittelteil 1.2, so dass sich der Stirnwandquerträger, von einem freien Ende eines Seitenteiles 1.1 ausgehend, in seinem Mittelteil 1.2 in Fahrzeuglängsrichtung verbreitert (Fig. 3) und in Fahrzeughochrichtung schmäler wird (Fig. 4). Damit kann der Stirnwandquerträger vorteilhaft aus einem ursprünglich im Wesentlichen konstanten kastenförmigen Hohlprofil mittels Innen hochdruck ohne große Materialverdickungen oder -verdünnungen hergestellt werden und weist vorteilhaft im Mittelteil 1.2 eine große Auflagefläche in Fahrzeughochrichtung, in seinen Seitenteilen 1.1 eine große Auflagefläche in Fahrzeugquerrichtung auf. Durch das Innenhochdruckverfahren können zudem vorteilhaft starke lokale Umformungen, die die Festigkeit und Steifigkeit des Stirnwandquerträgers 1 schwächen würden, vermieden oder reduziert werden.

Die Seitenteile 1.1 verlaufen, ausgehend von dem Mittelteil 1.2 im Wesentlichen bogenförmig und stehen dabei gegenüber dem Mittelteil 1.2 in Fahrzeuglängsrichtung konvex hervor (Fig. 3). In ihren dem Mittelteil 1.2 abgewandten Endbereichen 1.3, die sich im Ausführungsbeispiel von einem freien Ende des Stirnwandquerträgers 1 in etwa bis zum Scheitelpunkt eines bogenförmigen Seitenteiles 1.1 erstrecken, sind die Seitenteile 1.1 1 auf ihrer in Fahrzeuglängsrichtung vorderen Außenseite der Kontur der Stirnwand 2 angepasst, so dass sie im eingebauten Zustand an dieser flächig anliegen.

In diesen Endbereichen 1.3 sind in einer ersten, in Fahrzeuglängsrichtung hinteren Wand 1.4 (in Fig. 3 strichliert angedeutet) drei Durchgangsbohrungen 1.5 ausgebildet, durch die Schweißpunkte auf einer der ersten Wand 1.4 gegenüberliegenden zweiten, in Fahrzeuglängsrichtung vorderen Wand 1.6 für einen Arm einer Schweißzange (nicht dargestellt) zugänglich sind.

Auch in seinem Mittelteil 1.2 weist der Stirnwandquerträger 1 in einer weiteren ersten, in Fahrzeughochrichtung oberen Wand 1.4' drei Durchgangsbohrungen 1.5 auf, durch die Schweißpunkte auf einer dieser weiteren ersten Wand 1.4' gegenüberliegenden weiteren zweiten, in Fahrzeughochrichtung unteren Wand 1.6' für einen Arm einer Schweißzange (nicht dargestellt) zugänglich sind. Das Mittelteil 1.2 ist mit einem Abstand a zur Stirnwand 2 angeordnet, so dass eine Einbeulung der Stirnwand bei einem Crash nicht behindert wird.

Der Mittelteil 1.2 ist im unteren Bereich seiner in Fahrzeuglängsrichtung vorderen und hinteren Außenseite sowie seiner in Fahrzeughochrichtung unteren Außenseite einer Aufnahmeaussparung 3.1 im Mitteltunnel 3 angepasst und im eingebauten Zustand formschlüssig in dieser aufgenommen.

An seinen freien Enden weist der Stirnwandquerträger 1 drei Flansche 1.7 zur Anbindung an die A-Säulen auf, die durch Umbiegen entsprechender Abschnitte des Kastenprofils hergestellt werden.

Zum Einbau wird der Stirnwandquerträger 1 mit seinem Mittelteil 1.2 in die Aufnahmeaussparung 3.1 des bereits mit der Stirnwand 2 verbundenen Mitteltunnels 3 formschlüssig eingelegt und dadurch in einer Montageposition zentriert. Dabei liegen die Endbereiche 1.3 der Seitenteile 1.1 an der Stirnwand 2 an, während der diese Endbereiche 1.3 und den Mittelteil 1.2 verbindende Übergangsbereich des Stirnwandquerträgers von der Stirnwand 2 beabstandet ist und damit nicht an die Freiformfläche angepasst sein muss, in der die Stirnwand 2 in den Mitteltunnel 3. übergeht. Die Flansche 1.7 an den freien Enden des Stirnwandquerträgers 1 liegen in diesem Zustand an den A-Säulen des Personenkraftfahrzeugs an, die über die Flanschbereiche 2.1 seitlich an die Stirnwand 2 angebunden sind.

Ein Arm einer Schweißzange (nicht dargestellt) durchgreift die Öffnungen 1.5 in der ersten Wand 1.4' des Mittelteils 1.2 und bindet die zweite Wand 1.6' des Mittelteils 1.2 durch Punktschweißen an den Mitteltunnel 3 an, an dem die zweite Wand 1.6' anliegt. In gleicher Weise durchgreift ein Arm einer Schweißzange (nicht dargestellt) die Öffnungen 1.5 in der ersten Wand 1.4 der Seitenteile 1.1 und bindet die zweite Wand 1.6 des Endbereichs 1.3 durch Punktschweißen an die Stirnwand 2 an, an der die Endbereiche 1.3 anliegen.

Die Flansche 1.7 werden auf ihrer in Fahrzeugquerrichtung äußeren Oberfläche, mit der sie an den A-Säulen (nicht dargestellt) anliegen, mit diesen verklebt.

Die vorgenannten Montageschritte können in beliebiger Reihenfolge ausgeführt werden. So kann beispielsweise zunächst der Stirnwandquerträger 1 durch das beschriebene Punktschweißen an dem Mitteltunnel 3 angeheftet und anschließend an der Stirnwand 2 angebunden werden, bevor die A-Säulen seitlich an dieser befestigt und dabei zugleich mit den Flanschen 1.7 verklebt werden.

Wie insbesondere in Fig. 1 und Fig. 3 erkennbar, stützt sich der Stirnwandquerträger 1 in seinen Endbereichen 1.3 und seinem Mittelteil 1.2 flächig an der Stirnwand 2 bzw. dem Mitteltunnel 3 ab. Zusätzlich ist er an diesen Stellen mittels Punktschweißen direkt an die Stirnwand 2 bzw. den Mitteltunnel 3 angebunden. Der Stirnwandquerträger stützt sich darüber hinaus mit seinen Flanschen 1.7 flächig an den A-Säulen ab und ist an diese mittels Verkleben ebenfalls direkt angebunden.

Durch dieses flächige Anliegen und die dortige direkte Anbindung können auf eine A-Säule oder die Stirnwand 2 wirkende Kräfte direkt und mit einem im Wesentlichen ungestörten Kraftfluss in den Mitteltunnel 3, eine gegenüberliegende A-Säule bzw. die Stirnwand 2 eingeleitet werden. Diese direkte Kraftübertragung zwischen Stirnwandquerträger 1 einerseits und A-Säule, Stirnwand 2 bzw. Mitteltunnel 3 andererseits verbessert die Kraftverteilung im Stirnwandquerträger und erhöht dadurch die Steifigkeit des Kraftfahrzeugs sowohl in Fahrzeugquerrichtung als auch in Fahrzeuglängsrichtung und reduziert insbesondere ein Eindringen eines Vorderwagens in den von diesem durch die Stirnwand 2 getrennten Fahrgastraum.

Durch die bogenförmige, konvex nach vorne hervorstehende Ausbildung der Seitenteile 1.1, die nur in Teilbereichen (im Ausführungsbeispiel ihren Endbereichen 1.3) an der Stirnwand 2 anliegen und dort angebunden sind, können auch in Fahrzeuglängsrichtung nach hinten versetzte A-Säulen und eine in Fahrzeuglängsrichtung ebenfalls nach hinten versetzte Aufnahmeaussparung 3.1 im Mitteltunnel 3 über den Stirnwandquerträger 1 verbunden werden, ohne dass dieser der im Allgemeinen komplizierten Freiformfläche im Übergangsbereich zwischen Stirnwand 2 und Mitteltunnel 3 folgen muss. Dies vereinfacht die Form des Stirnwandquerträgers 1, der im Ausführungsbeispiel im Wesentlichen in Form eines aus dem Bogensport bekannten sogenannten Recurve-Bogens ausgebildet ist.

Zusätzlich reduziert der von den A-Säulen bzw. dem Mitteltunnel 3 an die Stirnwand 2 herangeführte Stirnwandquerträger 1 den im Fahrgastraum zur Verfügung stehenden Platz nur wenig und bietet gleichzeitig in seinem von der Stirnwand 2 beabstandeten Bereich (im Wesentlichen seinem Mittelteil 1.2 und dem Übergangsbereich zu seinen Endbereichen 1.3) Raum für zusätzliche Fahrzeugkomponenten, beispielsweise Teile einer Fahrzeugklimaanlage (nicht dargestellt).

Die konvex nach vorne vorstehende Ausbildung der bogenförmigen Seitenteile 1.1, die mit dem in Fahrzeuglängsrichtung nach hinten versetzten Mittelteil 1.2 und den A-Säulen verbunden sind, reduziert vorteilhaft ein Eindringen des Vorderwagens in den Fahrgastraum. Denn hierbei muss die Stirnwand 2 zunächst die konvexen Ausbuchtungen der Seitenteile 1.1 plastisch verformen. Dies erhöht gegenüber sich im Wesentlichen in Fahrzeugquerrichtung erstreckenden Stirnwandquerträgern, bei denen an den seitlichen Anbindungen ausschließlich Schubspannungen auftreten, die Energieabsorption und Steifigkeit des Stirnwandquerträgers, in dessen seitlichen Anbindungen Kräfte teilweise als Druckspannungen abgeleitet werden.

## Patentansprüche

1. Kraftfahrzeug mit zwei A-Säulen, einer Stirnwand (2), einem Mitteltunnel (3) und einem Stirnwandquerträger (1), wobei der Stirnwandquerträger (1) zwei Seitenteile (1.1), die an den A-Säulen des Kraftfahrzeugs angebunden sind, und einen diese beiden Seitenteile verbindenden Mittelteil (1.2) umfasst und die Seitenteile (1.1) so geformt sind, dass sie an der Stirnwand (2) des Kraftfahrzeugs wenigstens teilweise anliegen und dort an die Stirnwand (2) angebunden sind, wobei der Mittelteil (1.2) an dem Mitteltunnel (3) des Kraftfahrzeugs wenigstens teilweise anliegt, **dadurch gekennzeichnet, dass** der Mittelteil (1.2) zur Stirnwand (2) mit einem Abstand (a) beabstandet ist.

2. Kraftfahrzeug nach Anspruch 1, **dadurch gekennzeichnet, dass** die Seitenteile (1.1) an der Stirnwand (2) wenigstens teilweise flächig anliegen und dort durch Verschrauben, Nieten, Kleben und/oder Schweißen, insbesondere Punktschweißen angebunden sind.

3. Kraftfahrzeug nach einem der vorhergehenden Ansprüche, **dadurch gekennzeichnet, dass** der Mittelteil (1.2) an dem Mitteltunnel (3) wenigstens teilweise flächig anliegt und dort durch Verschrauben, Nieten, Kleben und/oder Schweißen, insbesondere Punktschweißen angebunden ist.

4. Kraftfahrzeug nach einem der vorhergehenden Ansprüche, **dadurch gekennzeichnet, dass** die Seitenteile (1.1) an den A-Säulen des Kraftfahrzeugs durch Verschrauben, Nieten, Kleben und/oder Schweißen, insbesondere Punktschweißen angebunden sind.

5. Kraftfahrzeug nach Anspruch 4, **dadurch gekennzeichnet, dass** die Seitenteile an ihren mit den A-Säulen verbundenen Enden eine Flanschanordnung (1.7) zur Anbindung an die A-Säulen aufweisen.

6. Kraftfahrzeug nach einem der vorhergehenden Ansprüche, **dadurch gekennzeichnet, dass** die Seitenteile (1.1) und/oder der Mittelteil (1.2) als Hohlprofil ausgebildet sind, wobei eine erste Wand (1.4) des Hohlprofils eine oder mehrere Öffnungen (1.5) aufweist, durch welche eine oder mehrere Verbindungsstellen, insbesondere Punktschweißstellen auf einer zweiten Wand (1.6) des Hohlprofils zugänglich sind.

7. Kraftfahrzeug nach einem der vorhergehenden Ansprüche, **dadurch gekennzeichnet, dass** der Mittelteil (1.2) und die Seitenteile (1.1) einteilig miteinander ausgebildet sind.

8. Kraftfahrzeug nach einem der vorhergehenden Ansprüche, **dadurch gekennzeichnet, dass** der Stirnwandquerträger (1) mittels eines Innenhochdruckverfahrens hergestellt ist.

9. Kraftfahrzeug nach einem der vorhergehenden Ansprüche, **dadurch gekennzeichnet, dass** die Seitenteile (1.1) gegenüber dem Mittelteil (1.2) in Fahrzeuglängsrichtung konvex nach vorne vorstehen.

10. Kraftfahrzeug nach einem der vorhergehenden Ansprüche, **dadurch gekennzeichnet, dass** der Mitteltunnel (3) eine Aufnahmeaussparung (3.1) zur formschlüssigen Aufnahme des Mittelsteils (1.2) des Stirnwandquerträgers (1) aufweist.

## Claims

1. Motor vehicle having two A-pillars, a scuttle (2), a centre tunnel (3) and a scuttle crossmember (1), the scuttle crossmember (1) comprising two side parts (1.1), which are connected to the A-pillars of the motor vehicle, and a centre part (1.2) which connects the said two side parts, and the side parts (1.1) being shaped in such a way that they bear at least partially against the scuttle (2) of the motor vehicle and are connected there to the scuttle (2), the centre part (1.2) bearing at least partially against the centre tunnel (3) of the motor vehicle, **characterized in that** the centre part (1.2) is spaced apart from the scuttle (2) at a distance (a).

2. Motor vehicle according to Claim 1, **characterized in that** the side parts (1.1) bear at least partially flatly against the scuttle (2) and are connected there by screwing, riveting, adhesive bonding and/or welding, in particular spot welding.

3. Motor vehicle according to one of the preceding claims, **characterized in that** the centre part (1.2) bears at least partially flatly against the centre tunnel (3) and is connected there by screwing, riveting, adhesive bonding and/or welding, in particular spot welding.

4. Motor vehicle according to one of the preceding claims, **characterized in that** the side parts (1.1) are connected to the A-pillars of the motor vehicle by screwing, riveting, adhesive bonding and/or welding, in particular spot welding.

5. Motor vehicle according to Claim 4, **characterized in that,** at their ends which are connected to the A-pillars, the side parts have a flange arrangement (1.7) for connection to the A-pillars.

6. Motor vehicle according to one of the preceding claims, **characterized in that** the side parts (1.1) and/or the centre part (1.2) are/is configured as a hollow profile, a first wall (1.4) of the hollow profile having one or more openings (1.5), through which one or more connecting points, in particular spot welding points on a second wall (1.6) of the hollow profile are accessible.

7. Motor vehicle according to one of the preceding claims, **characterized in that** the centre part (1.2) and the side parts (1.1) are configured integrally with one another.

8. Motor vehicle according to one of the preceding claims, **characterized in that** the scuttle crossmember (1) is produced by means of a hydroforming process.

9. Motor vehicle according to one of the preceding claims, **characterized in that** the side parts (1.1) protrude convexly to the front in the vehicle longitudinal direction with respect to the centre part (1.2).

10. Motor vehicle according to one of the preceding claims, **characterized in that** the centre tunnel (3) has a receiving cut-out (3.1) for the positively locking accommodation of the centre part (1.2) of the scuttle crossmember (1).

## Revendications

1. Véhicule automobile doté de deux montants A, d'un tablier (2), d'un tunnel central (3) et d'une traverse frontale (1), la traverse frontale (1) comprenant deux parties latérales (1.1) reliées aux montants A du véhicule automobile et une partie centrale (1.2) reliant ces deux parties latérales et les parties latérales (1.1) étant réalisées de telle sorte qu'elles reposent au moins en partie contre le tablier (2) du véhicule automobile et sont reliées à cet endroit au tablier (2), la partie centrale (1.2) reposant au moins en partie contre le tunnel central (3) du véhicule automobile, **caractérisé en ce que** la partie centrale (1.2) est écartée d'une certaine distance (a) par rapport au tablier (2).

2. Véhicule automobile selon la revendication 1, **caractérisé en ce que** les parties latérales (1.1) reposent au moins en partie à plat contre le tablier (2) et sont reliées à lui par vissage, rivetage, collage et/ou soudage, notamment soudage par points.

3. Véhicule automobile selon l'une quelconque des revendications précédentes, **caractérisé en ce que** la partie centrale (1.2) repose au moins en partie à plat contre le tunnel central (3) et est reliée à cet endroit par vissage, rivetage, collage et/ou soudage, notamment soudage par points.

4. Véhicule automobile selon l'une quelconque des revendications précédentes, **caractérisé en ce que** les parties latérales (1.1) sont reliées aux montants A du véhicule automobile par vissage, rivetage, collage et/ou soudage, notamment soudage par points.

5. Véhicule automobile selon la revendication 4, **caractérisé en ce que** les parties latérales comportent, au niveau de leurs extrémités reliées aux montants A, un agencement de bride (1.7) pour la jonction aux montants A.

6. Véhicule automobile selon l'une quelconque des revendications précédentes, **caractérisé en ce que** les parties latérales (1.1) et/ou la partie centrale (1.2) sont réalisées sous la forme d'un profilé creux, une première paroi (1.4) du profilé creux comportant une ou plusieurs ouvertures (1.5) à travers lesquelles un ou plusieurs emplacements de jonction sont accessibles, notamment des emplacements de soudage par point situés sur une deuxième paroi (1.6) du profilé creux.

7. Véhicule automobile selon l'une quelconque des revendications précédentes, **caractérisé en ce que** la partie centrale (1.2) et les parties latérales (1.1) sont réalisées entre elles d'un seul tenant.

8. Véhicule automobile selon l'une quelconque des revendications précédentes, **caractérisé en ce que** les traverses frontales (1) sont fabriquées à l'aide d'un procédé de haute pression intérieure.

9. Véhicule automobile selon l'une quelconque des revendications précédentes, **caractérisé en ce que** les parties latérales (1.1) font saillie vers l'avant de façon convexe par rapport à la partie centrale (1.2) dans la direction longitudinale du véhicule.

10. Véhicule automobile selon l'une quelconque des revendications précédentes, **caractérisé en ce que** le tunnel central (3) comporte un évidement de logement (3.1) pour le logement par complémentarité de formes de la partie centrale (1.2) de la traverse frontale (1).
